# EUROPEAN PATENT SPECIFICATION

(11) **EP 2 174 804 B1**
(45) Date of publication and mention of the grant of the patent: **17.04.2013**
(21) Application number: 08791292.9
(22) Date of filing: 17.07.2008
(51) Int. Cl.: B60C 11/02, B60C 1/00, B60C 11/00, C08L 7/00, C08L 21/00, C08K 3/04

(54) **TREAD FOR RETREADED TIRE AND RETREADED TIRE**
PROFIL FÜR EINEN RUNDERNEUERTEN REIFEN UND RUNDERNEUERTER REIFEN
BANDE DE ROULEMENT POUR PNEU RÉCHAPPÉ ET PNEU RÉCHAPPÉ

(30) Priority: 27.07.2007 JP 2007196353; 18.09.2007 JP 2007240970
(43) Date of publication of application: 14.04.2010
(73) Proprietor: Bridgestone Corporation, Tokyo 104-8340 (JP)
(72) Inventor: AOKI, Hirofumi, Kodaira-shi Tokyo 187-8531 (JP)
(74) Representative: Waldren, Robin Michael
(86) International application number: PCT/JP2008/062938
(87) International publication number: WO 2009/016971

(56) References cited:
- EP-A1- 0 940 435
- EP-A1- 1 308 317
- EP-A1- 1 642 928
- EP-A1- 1 752 489
- EP-A1- 1 780 238
- EP-A2- 1 757 463
- WO-A2-2007/047943
- JP-A- 2000 239 442
- JP-A- 2002 097 311
- JP-A- 2004 224 278
- JP-A- 2005 015 691
- JP-A- 2005 068 240
- JP-A- 2006 342 193
- US-A1- 2002 193 490

## Description

### TECHNICAL FIELD

This invention relates to a tread for retread tire and a retread tire provided with the tread for retread tire, and more particularly to a tread for retread tire in which a heat build-up is improved to suppress deterioration of peel strength to a base tire when being applied to a retread tire and a good peel strength is obtained without sacrificing a tear resistance as well as a retread tire.

### BACKGROUND ART

As a method of manufacturing a retread tire, there are a method wherein an unvulcanized re-covering tread rubber having no tread pattern is attached onto a tread portion of a base tire and built through vulcanization in a mold (re-molding system), and a method wherein a cushion rubber for adhesion made from an unvulcanized rubber is disposed on a tread portion of a base tire and then a vulcanized re-covering tread having a tread pattern (precured tread) is attached onto the base tire and joined through vulcanization with a vulcanizer (precuring system).

In the conventional manufacture of the retread tire is used a tread with a single-layer structure as a re-covering tread. In the tread with the single-layer structure, sulfur is necessary to be compounded at not less than a specified amount for holding a peel strength between the tread and the base tire. Consequently, the aging resistance and tear resistance are deteriorated, and hence there is a restriction in the improvement of wear resistance. Also, there is a problem that a heat-generating temperature of the tread portion as a whole is raised by the heat generation of the tread rubber during running to cause the lowering of the peel strength at an interface between the base tread and the tread for retread, i.e., at a retreading face to thereby result in a peeling. In order to deal with such a problem, there is a method wherein the heat build-up of the tread rubber is improved, for example, by rendering the tread structure into a two-layer structure made from different rubber compositions such as a cap/base structure (for example, see JP-A-2004-224278).

Also, in the retread tire manufactured by the precuring system, it is attempted to improve a low heat build-up in the running after retreading by using a rubber having a heat build-up lower than that of a rubber constituting the precured tread as a cushion rubber used for the adhesion to the base tire (for example, see JP-A-H10-129216).

### DISCLOSURE OF THE INVENTION

### PROBLEMS TO BE SOLVED BY THE INVENTION

In the method of rendering the tread structure into the cap/base structure, however, the heat build-up is improved, but the tear resistance is deteriorated. Even in the tread of this structure, sulfur is necessary to be compounded at not less than a specified amount for holding the adhesion to the base tire, so that there is a problem that the tear resistance is further deteriorated.

On the other hand, only when the heat build-up of the cushion rubber is made lower than that of the rubber constituting the precured tread, the contribution to lower the running temperature of the tire is less. Further, even if it is intended to increase the adhesion force of the cushion rubber itself between the base tire and the precured tread, there is a problem that a rubber compounding is limited due to the low heat build-up.

It is, therefore, an object of the invention to solve the above-mentioned problems of the conventional techniques and to provide a tread for retread tire in which the heat build-up of the tread rubber is improved when being applied to a retread tire and the running temperature is lowered to suppress the deterioration of peel strength at a retreading face between a tread and a base tire and further a good peel strength can be obtained without sacrificing the tear resistance, as well as a retread tire applying such a tread for retread tire.

### MEANS FOR SOLVING PROBLEM

The inventor has discovered that a tread for retread tire is made to a two-layer structure composed of a cap rubber located side a front surface of the tread and a base rubber located side a bottom surface of the tread, and the heat build-up of the base rubber having a relatively large contribution to the running temperature can be improved to lower the running temperature to thereby suppress the deterioration of peel strength at a retreading face, and also an amount of sulfur compounded into the base rubber contacting with a base tire can be rendered into a constant amount to obtain a good peel strength without sacrificing the tear resistance, and as a result, the invention has been accomplished.

That is, the tread for retread tire according to the invention is a tread for retread tire comprising a cap rubber located on the side of a front surface of the tread and a base rubber located on the side of a bottom surface of the tread, **characterized in that** the base rubber has a loss tangent (tan δ) at 25°C and 2% strain of not more than 0.10 and an elongation at break (Eb) of not less than 460%.

In a preferable embodiment of the tread for retread tire according to the invention, an amount of sulfur compounded into the base rubber is 1.4-2.0 parts by mass based on 100 parts by mass of a rubber component.

In another preferable embodiment of the tread for retread tire according to the invention, carbon black compounded into the base rubber has a nitrogen adsorption specific surface area (N₂SA) of not more than 100 m²/g and a dibutyl phthalate (DBP) oil absorption of not more than 105 ml/100 g.

In the other preferable embodiment of the tread for retread tire according to the invention, the amount of sulfur compounded into the base rubber is larger than an amount of sulfur compounded into the cap rubber.

Also, the retread tire according to the invention is characterized by comprising the aforementioned tread for retread tire. At this moment, the retread tire is preferable to be manufactured by a remolding system or a precuring system.

### EFFECTS OF THE INVENTION

According to the invention, there are developed advantageous effects that a tread for retread tire suitable for use in a retread tire and lowering a running temperature to maintain a good adhesion to a base tire over a tire life, and having a good tear resistance, as well as a retread tire comprising such a tread for retread tire can be provided.

### BRIEF DESCRIPTION OF THE DRAWINGS

FIG. 1 is a sectional view of an embodiment of the tread for retread tire according to the invention;
FIG. 2 is a sectional view of a modified embodiment of the tread for retread tire according to the invention;
FIG. 3 is a widthwise sectional view of an embodiment of the retread tire according to the invention manufactured by a remolding system using the tread for retread tire shown in FIG. 1; and
FIG. 4 is a widthwise sectional view of an embodiment of the retread tire according to the invention manufactured by a precuring system using the tread for retread tire shown in FIG. 2.

### DESCRIPTION OF REFERENCE SYMBOLS

| | |
|---|---|
| 1 | Tread for retread tire |
| 2 | Cap rubber |
| 3 | Base rubber |
| 4 | Tread pattern |
| 5 | Base tire |
| 6 | Cushion rubber |

### BEST MODE FOR CARRYING OUT THE INVENTION

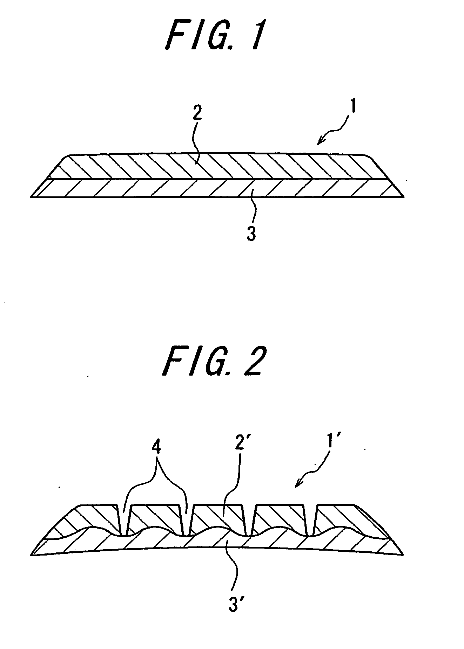

The tread for retread tire according to the invention will be described in detail below with reference to the attached drawings. FIG. 1 is a sectional view of an embodiment of the tread for retread tire according to the invention. FIG. 2 is a sectional view of a modified embodiment of the tread for retread tire according to the invention.

The tread 1 for retread tire shown in FIG. 1 has a so-called cap/base structure composed of an unvulcanized cap rubber 2 located side a front surface of the tread 1 and a base rubber 3 located side a bottom surface of the tread 1.

In the tread 1 for retread tire according to the invention, it is necessary that the loss tangent (tan δ) of the base rubber 3 is not more than 0.10 and the elongation at break (Eb) of the base rubber 3 is not less than 460%. When tan δ of the base rubber 3 is not more than 0.10, the heat generation of the tread rubber during the running can be sufficiently suppressed to lower the running temperature, and at the same time the tear resistance can be improved. If tan δ exceeds 0.10, the effect of suppressing the heat generation of the tread rubber is insufficient and the heat-generating temperature during running becomes higher and hence there is a fear of deteriorating the tear resistance. It is preferable that tan δ of the base rubber 3 is not more than 0.09 for further suppressing the heat generation of the tread rubber to more improve the tear resistance. Moreover, in order to obtain tan δ of not more than 0.10, there are mentioned, for example, a method of increasing an amount of sulfur compounded into a rubber composition used in the base rubber 3 and a method of decreasing an amount of a filler compounded, but it is not particularly limited thereto.

Also, when Eb of the base rubber 3 is not less than 460%, the tear resistance can be made good, but it is preferable that Eb is not less than 480% for obtaining more excellent tear resistance. Moreover, in order to obtain Eb of not less than 460%, there is mentioned, for example, a method of decreasing an amount of a filler compounded into a rubber composition used in the base rubber 3, but it is not particularly limited thereto.

A rubber component in a rubber composition applied to the cap rubber 2 is not particularly limited, but includes natural rubber (NR) and synthetic rubbers such as polybutadiene rubber (BR), polyisoprene rubber (IR), styrene-butadiene copolymer rubber (SBR) and the like. These rubber components may be used alone or in a blend of two or more. In case of blending, it is preferable to blend natural rubber (NR) with polybutadiene rubber (BR), wherein a blending ratio of NR/BR is preferably within a range of 60/40-80/20.

A filler in the rubber composition for the cap rubber 2 is not particularly limited, but includes carbon black and silica. At this moment, carbon black is preferable to be SAF and ISAF grades. When silica is used as the filler, it is preferable to add a silane coupling agent in the compounding from a viewpoint of further improving the reinforcement.

A rubber component in a rubber composition applied to the base rubber 3 is not particularly limited, but includes natural rubber (NR) and synthetic rubbers such as polybutadiene rubber (BR), polyisoprene rubber (IR), styrene-butadiene copolymer rubber (SBR) and the like. These rubber components may be used alone or in a blend of two or more.

In the invention, an amount of sulfur compounded into the base rubber 3 is preferable to be 1.4-2.0 parts by mass based on 100 parts by mass of the rubber component. When the amount of sulfur compounded into the base rubber 3 is not more than 1.4 parts by mass, the adhesion to the base tire may not be ensured sufficiently, while when it is not less than 2.0 parts by mass, there is a fear that the aging resistance is deteriorated and also the tear resistance is deteriorated. The amount of sulfur compounded into the base rubber 3 is preferable to be 1.5-1.8 parts by mass from a viewpoint of further improving the adhesion to the base tire and the tear resistance.

As a filler compounded into the rubber composition for the base rubber 3 is mentioned carbon black. At this moment, the carbon black is preferable to have a nitrogen adsorption specific surface area (N₂SA) of not more than 100 m²/g and a dibutyl phthalate (DBP) oil absorption of not more than 105 ml/100 g. By using carbon black satisfying the above ranges of nitrogen adsorption specific surface area (N₂SA) and DBP oil absorption can be simultaneously established the suppression of heat generation and the tear resistance. As a concrete example of such carbon black may be mentioned HAF grade (for example, N330, N326) and so on. The amount of carbon black compounded is preferable to be 30-50 parts by mass, more preferably 35-40 parts by mass from a viewpoint of ensuring the heat build-up.

In addition to carbon black, silica may also be compounded to the rubber composition used in the base rubber 3 as a filler. The amount of silica compounded is preferably within a range of 3-8 parts by mass based on 100 parts by mass of the rubber component.

In the invention, the amount of sulfur compounded into the base rubber is preferable to be made larger than the amount of sulfur compounded into the cap rubber. When the amount of sulfur compounded into the base rubber is larger than that of the cap rubber, a good tear resistance may be given to a tire over a period of initial stage to terminal stage of tire life.

Moreover, the rubber composition applied to the cap rubber 2 and the base rubber 3 may be compounded with additives usually used in the tire tread, that is, a vulcanizing agent, a vulcanization accelerator, an antioxidant, a softener such as a process oil, and so on within a range of an amount usually used in the tread in addition to the above-mentioned rubber component and filler.

The tread 1 for retread tire with a cap/base two-layer structure according to the invention can be obtained, for example, by simultaneously extruding and forming two layers with a conventional extruder or the like for rubber processing.

Although the tread 1 for retread tire may be used at an unvulcanized state to manufacture a retread tire, the tread 1 for retread tire of the unvulcanized state is built through vulcanization with a suitable mold having protrusions for forming a tread pattern to prepare a tread 1' for retread tire comprised of a vulcanized cap rubber 2' and a vulcanized base rubber 3' having a tread pattern 4 shown in FIG. 2 (precured tread), from which a retread tire may be manufactured.

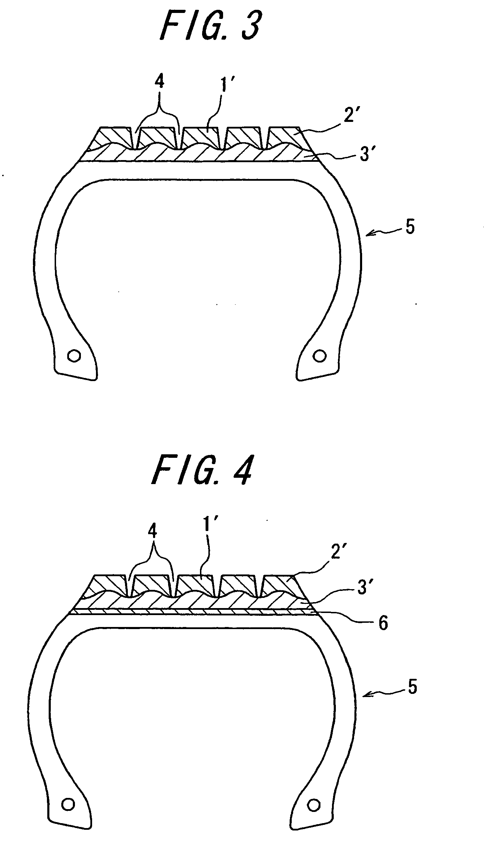

The retread tire according to the invention will be described in detail below with reference to the attached drawings. FIG. 3 is a widthwise sectional view showing a retread tire manufactured by a remolding system using the tread 1 for retread tire shown in FIG. 1. The illustrated retread tire is manufactured by removing a tread rubber from a new tire product or retread tire and thereafter attaching the tread 1 for retread tire shown in FIG. 1 on a base tire 5 formed by buffing and then joining through vulcanization in a mold according to the conventional method of manufacturing a retread tire through a remolding system, whereby a vulcanized tread 1' for retread tire comprised of the vulcanized cap rubber 2' and base rubber 3' is provided on the base tire 5.

FIG. 4 shows a retread tire manufactured by a precuring system using the vulcanized tread 1' for retread tire shown in FIG. 2. The illustrated retread tire is manufactured by attaching the vulcanized tread 1' for retread tire on an outer peripheral surface of the base tire 5 through a rubber cement or an unvulcanized cushion rubber 6 for adhesion and then joining through vulcanization with a vulcanizer. The retread tire according to the invention can be manufactured by using the tread for retread tire according to the invention in either one of the remolding system and the precuring system as described above. In the retread tire, the heat build-up of the tread is improved to lower the running temperature, and the deterioration of peel strength at the retreading face between the tread and the base tire is suppressed to maintain the good adhesion between the tread and the base tire over a tire life and provide the excellent tear resistance.

The following examples are given in illustration of the invention and are not intended as limitations thereof.

### EXAMPLES

A rubber composition used in each of the base rubber and cap rubber is obtained according to a compounding recipe as shown in Table 1 by milling with a Banbury mixer usually used in the rubber industry according to the usual manner. The loss tangent (tan δ) and elongation at break (Eb) of each rubber composition obtained for the base rubber are measured as follows. The measured results are shown in Table 1.

### (1) Loss tangent (tan δ)

A test specimen is prepared by taking out a base rubber from a tire at a sliced state through a given method and its tan δ is measured by using a viscoelastic spectrometer made by TOYO SEIKI CO., LTD. under conditions of an initial load of 160 g, a dynamic strain of 2%, a frequency of 52 Hz and a temperature of 25°C.

### (2) Elongation at break (Eb)

A JIS No. 3 dumbbell specimen is prepared by taking out a base rubber from a tire at a sliced state through a given method and subjected to a tensile test at 25°C according to JIS K6251 to measure an elongation at break (Eb) (%).

Subsequently, the rubber compositions obtained as mentioned above are applied to respective cap rubber 2 and base rubber 3 of a tread 1 for retread tire to prepare a retread tire shown in FIG. 3 by the remolding system according to the usual manner. First of all, an unvulcanized tread 1 for retread tire is prepared by extruding rubber compositions for cap rubber and base rubber into two layers through a usual extruder for rubber or the like. Then, a surface of a tire having a tire size of 11R22.5 after the completion of a primary tire life is subjected to a given buffing treatment and attached with the unvulcanized tread 1 for retread tire and then vulcanized to prepare a retread tire for each of Examples and Comparative Examples. Moreover, a retread tire as Conventional Example is prepared in the same manner as mentioned above except that a tread is comprised of only a cap rubber 2.

With respect to the retread tires for Examples, Comparative Examples and Conventional Example, the heat build-up, peel resistance and tear resistance are evaluated by the following methods. The results are shown in Table 1.

### (3) Heat build-up

A drum test is carried out under conditions of a constant speed and a stepped load to measure a temperature at a constant depth position within a tire tread, and each measured temperature value of Examples and Comparative Examples is represented by an index on the basis that the measured temperature value of Conventional Example is 100. The larger the index value, the lower the heat-generating temperature of the tire, i.e., the larger the effect of lowering the heat generation.

### (4) Peel resistance

A sample is cut out from the prepared tire and subjected to a peel test according to JIS K6256 to measure a peel strength at the retreading face. Also, the tire is mounted onto a truck and traveled over 100000 km, and thereafter the same test as mentioned above is conducted to the tire to measure a residual peel strength. The measure numerical value is represented by an index on the basis that the peel strength or residual peel strength of the test sample obtained from the tire of Conventional Example is 100. The higher the index value, the larger the peel strength or residual peel strength and the better the peel resistance.

### (5) Tear resistance

After the tire is mounted onto a truck and traveled over 100000 km, a total length of tear generated on the tire is measured and represented by an index on the basis that the total length of tear in Conventional Example is 100. The higher the index value, the better the tear resistance.

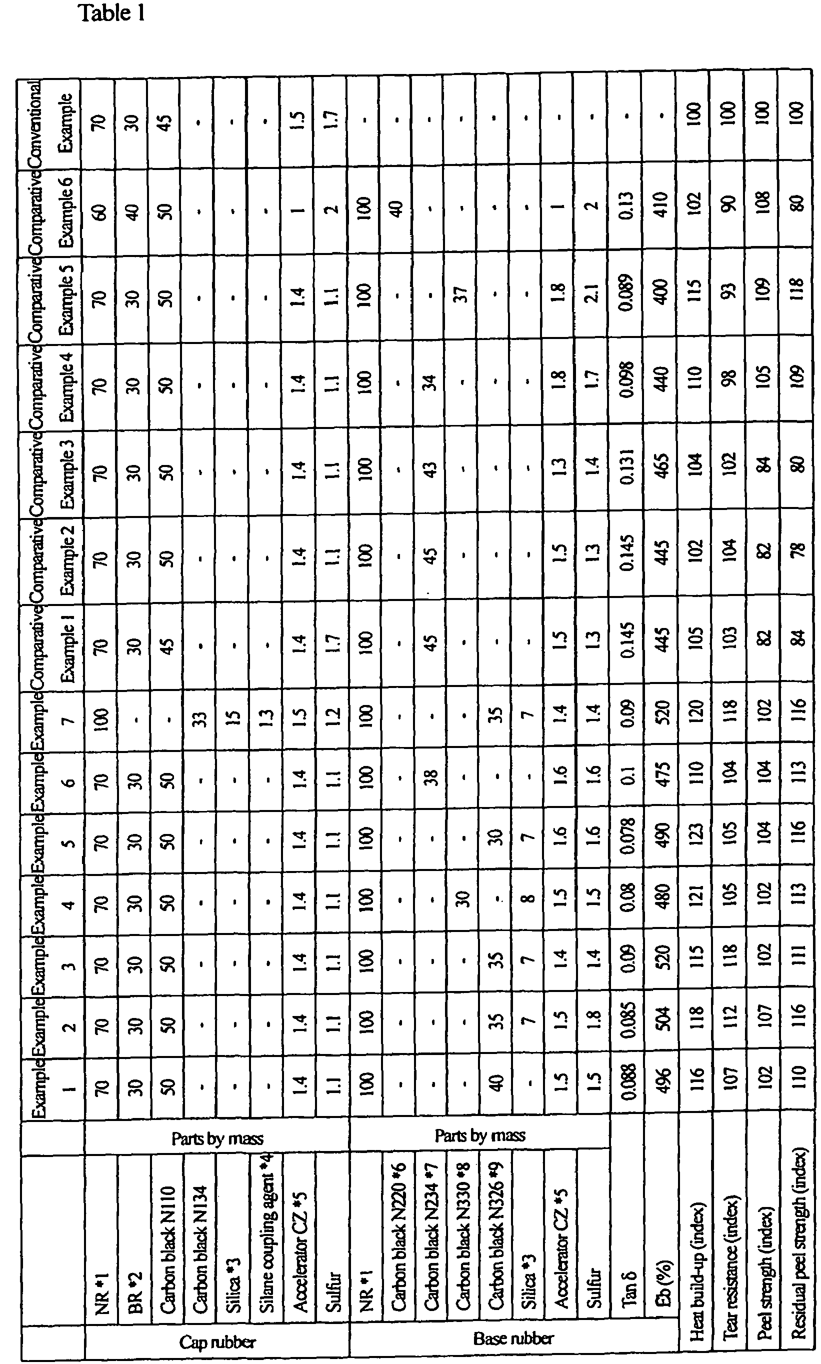

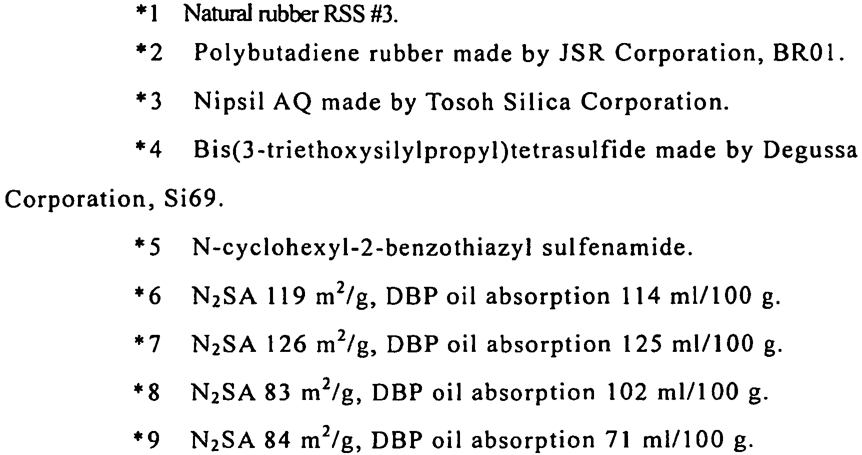

As seen from Table 1, in Examples 1-7 wherein the base rubber has tan δ of not more than 0.10 and Eb of not less than 460%, the heat build-up, tear resistance, peel strength and residual peel strength can be improved as compared with Conventional Example wherein the tread is comprised of only the cap rubber, and the good tear resistance and peel resistance can be maintained over a period of initial stage to terminal stage of tire life while suppressing the heat generation.

On the other hand, in Comparative Examples 1, 2 and 6 wherein tan δ exceeds 0.10 and Eb is less than 460%, and Comparative Example 3 wherein Eb is not less than 460% but tan δ exceeds 0.10, the heat build-up is not so improved as compared with Examples 1-7. The peel strength and residual peel strength in Comparative Examples 1-3, and the tear resistance and residual peel strength in Comparative Example 6 are deteriorated as compared with Conventional Example. Moreover, in Comparative Examples 4 and 5 wherein tan δ is not more than 0.10 but Eb is less than 460%, the tear resistance is deteriorated as compared with Conventional Example.

## Claims

1. A tread for retread tire comprising a cap rubber located on the side of a front surface of the tread and a base rubber located on the side of a bottom surface of the tread, **characterized in that** the base rubber has a loss tangent (tan δ) at 25°C and 2% strain of not more than 0.10 and an elongation at break (Eb) of not less than 460%.

2. A tread for retread tire according to claim 1, wherein an amount of sulfur compounded into the base rubber is 1.4-2.0 parts by mass based on 100 parts by mass of a rubber component.

3. A tread for retread tire according to claim 1, wherein carbon black compounded into the base rubber has a nitrogen adsorption specific surface area (N₂SA) of not more than 100 m²/g and a dibutyl phthalate (DBP) oil absorption of not more than 105 ml/100 g.

4. A tread for retread tire according to claim 1 or 2, wherein the amount of sulfur compounded into the base rubber is larger than an amount of sulfur compounded into the cap rubber.

5. A retread tire comprising a tread for retread tire as claimed in any one of claims 1-4.

6. A retread tire according to claim 5 manufactured by a remolding system.

7. A retread tire according to claim 5 manufactured by a precuring system.

## Patentansprüche

1. Profil für einen runderneuerten Reifen umfassend einen Deckkautschuk, an der Seite einer Vorderfläche des Profils angeordnet und einen Basiskautschuk, an der Seite einer Bodenfläche der Lauffläche angeordnet, **dadurch gekennzeichnet, dass** der Basiskautschuk einen Verluststangens (tan δ) bei 25°C und eine 2% Spannung von nicht mehr als 0,10 und eine Bruchdehnung (Eb) von nicht weniger als 460% aufweist.

2. Profil für einen runderneuerten Reifen nach Anspruch 1, wobei ein in den Basiskautschuk hineingemischter Schwefelanteil 1,4-2,0 Masseteile basierend auf 100 Masseteilen einer Kautschukkomponente ist.

3. Profil für einen runderneuerten Reifen nach Anspruch 1, wobei der in den Basiskautschuk hineingemischter Russ eine spezifische Stickstoff-Absorptionsoberfläche (N₂SA) von nicht mehr als 100 m²/g und eine Dibutylphtalat (DBP) - Ölabsorption von nicht mehr als 105 ml/100g hat.

4. Profil für einen runderneuerten Reifen nach Anspruch 1 oder Anspruch 2, wobei der in den Basiskautschuk hineingemischte Schwefelanteil grösser ist, als ein in den Deckkautschuk hineingemischter Schwefelanteil.

5. Runderneuerter Reifen umfassend ein Profil für einen runderneuerten Reifen nach einem der Ansprüche 1 bis 4.

6. Runderneuerter Reifen nach Anspruch 5, hergestellt durch ein Runderneuerungssystem.

7. Runderneuerter Reifen nach Anspruch 5, hergestellt durch ein Vorhärtungssystem.

## Revendications

1. Bande de roulement pour pneu réchappé comprenant un caoutchouc de recouvrement situé sur le côté d'une surface frontale de la bande de roulement et un caoutchouc de base situé sur le côté d'une surface inférieure de la bande de roulement, **caractérisée en ce que** le caoutchouc de base a une tangente de perte (tan δ) à 25°C et 2% de contrainte ne dépassant pas 0,1 ainsi qu'un allongement à la rupture (Eb) supérieur ou égal à 460%.

2. Bande de roulement pour pneu réchappé selon la revendication 1, dans laquelle une quantité de soufre mélangée dans le caoutchouc de base est de 1,4 à 2,0 parties par poids sur la base de 100 parties par poids d'un composant de caoutchouc.

3. Bande de roulement pour pneu réchappé selon la revendication 1, dans laquelle le noir de carbone mélangé dans le caoutchouc de base a une aire de surface spécifique d'absorption d'azote (N₂SA) inférieure ou égale à 100 m²/g et une absorption d'huile dibutyle phatalate (DBP) inférieure ou égale à 105 ml/100 g.

4. Bande de roulement pour pneu réchappé selon les revendication 1 ou 2, dans laquelle la quantité de soufre mélangée dans le caoutchouc de base est supérieure à une quantité de soufre mélangée dans le caoutchouc de recouvrement.

5. Pneu réchappé comprenant une bande de roulement pour pneu réchappé selon l'une quelconque des revendications 1 à 4.

6. Pneu réchappé selon la revendication 5 fabriqué par un système de rechapage.

7. Pneu réchappé selon la revendication 5 fabriqué par un système de prédurcissement.
